# EUROPÄISCHE PATENTSCHRIFT

(11) **EP 2 784 758 B1**
(45) Veröffentlichungstag und Bekanntmachung des Hinweises auf die Patenterteilung: **30.08.2017**
(21) Anmeldenummer: 13161341.6
(22) Anmeldetag: 27.03.2013
(51) Int. Cl.: G07D 11/00

(54) **Justiervorrichtung für Selbstbedienungsgeräte sowie Justierverfahren**
Adjusting device for self-service devices and adjustment method
Dispositif d'ajustement pour appareils en libre-service et procédé d'ajustement

(43) Veröffentlichungstag der Anmeldung: 01.10.2014
(73) Patentinhaber: Wincor Nixdorf International GmbH, 33106 Paderborn (DE)
(72) Erfinder: Dietz, Oliver, 33178 Borchen (DE)
(74) Vertreter: Schaumburg und Partner Patentanwälte mbB

(56) Entgegenhaltungen:
- EP-A1- 2 423 888
- DE-A1- 4 039 396
- US-B2- 7 152 784

## Beschreibung

Die Erfindung betrifft eine Vorrichtung zum Justieren einer Einbaulage von Modulen in einem Selbstbedienungsgerät, das als Module ein erstes Modul, ein zweites Modul und ein Übergabemodul mit einem Übergabeschlitz zur Übergabe von Wertscheinen von dem ersten Modul zu dem zweiten Modul oder vice versa aufweist, wobei das Übergabemodul über Befestigungsmittel in einer Betriebsstellung unter Bildung eines Abstandes zu dem zweiten Modul gehalten ist.

Ferner betrifft die Erfindung ein Verfahren zum Justieren einer Einbaulage von Modulen in einem Selbstbedienungsgerät, wobei ein Übergabemodul zur Übergabe von Wertscheinen von einem ersten Modul zu einem zweiten Modul eines Selbstbedienungsgerätes oder vice versa vorgesehen ist.

Ein Selbstbedienungsgerät, nämlich ein aus mehreren Funktionsmodulen bestehender Geldautomat, ist beispielsweise aus der WO 2011/020904 A1 bekannt. Der Geldautomat weist als erstes Modul ein Kopfmodul zur Ein- und/oder Ausgabe von Wertscheinen sowie als zweites Modul einen Tresor zur Aufnahme von mehreren Geldkassetten auf. Zur Übergabe der Wertscheine von dem ersten Modul zu dem zweiten Modul oder vice versa ist ein Übergabemodul vorgesehen, das einen Übergabeschlitz sowie Führungsmittel umfasst. Für einen sicheren Transport der Wertscheine ist es wünschenswert, dass der Abstand zwischen dem Übergabemodul einerseits und dem ersten Modul und/oder dem zweiten Modul andererseits möglichst gering ist, damit insbesondere stark beanspruchte, zerknitterte Wertscheine nicht zu einer Blockierung des Transportweges und damit zum Ausfall des Geldautomaten führen. Aufgrund der Vielzahl von miteinander in Funktion stehenden Bauteilen in den Modulen resultiert eine Toleranzkette, die zu einem unzulässig hohen Abstand insbesondere des zweiten Moduls zu dem Übergabemodul führen kann. Insbesondere wenn das zweite Modul dafür ausgelegt ist, Transportwellen des Übergabemoduls anzutreiben, so dass damit eine Zahnradverbindung zwischen Übergabemodul und zweitem Modul besteht, kann es bei nicht korrektem Eingreifen der Zahnräder zu einer Abnutzung kommen, die das Transportverhalten der Wertscheine beeinträchtigt. Infolgedessen ist es zum Einrichten des Geldautomaten bekannt, das zweite Modul in vertikaler und horizontaler Richtung relativ zu dem Übergabemodul auszurichten, bis der vorgegebene Abstandssollbereich zwischen der Übergabeeinheit und dem zweiten Modul erreicht ist. Dies ist jedoch mit einem relativ hohen Justageaufwand verbunden.

Dokument DE 40 39 396 A1 offenbart ein safe-artiges Gehäuse mit einer Öffnung. Es ist eine Transporteinheit vorgesehen, die teilweise in eine Öffnung des Gehäuses hineinragt. Der Abstand zwischen dem Gehäuse und der Transporteinheit wird mit Hilfe eines Index-Stifts bestimmt.

Aus dem Dokument EP 2 423 888 A1 ist ein Geldautomat bekannt, bei dem eine Frontplatte in eine taschenartige Öffnung eingefügt wird. An der Innenseite der Frontplatte ist diese mit einer internen Baueinheit des Geldautomaten koppelbar, die über einen Schlitz in der Frontplatte von außen zugänglich ist. Es können Führungselemente vorgesehen sein, durch die die Lage der internen Baueinheit relativ zur Öffnung der Frontplatte ausgerichtet wird, so dass die interne Baueinheit von der Rückseite an die Frontplatte herangeführt wird.

Aufgabe der vorliegenden Erfindung ist es daher, eine Vorrichtung und ein Verfahren zum Justieren einer Einbaulage von Modulen in einem Selbstbedienungsgerät derart anzugeben, dass auf einfache Weise der Justage- und Herstellungsaufwand reduziert wird.

Diese Aufgabe wird durch eine Vorrichtung mit den Merkmalen des Patentanspruchs 1 sowie ein Verfahren mit den Merkmalen des Anspruchs 14 gelöst.
Der besondere Vorteil der erfindungsgemäßen Vorrichtung besteht darin, dass das Justiermittel auf den Bereich eines Übergabemoduls beschränkt angeordnet ist. Durch einfaches Verstellen des Justiermittels lassen sich unterschiedliche Abstände zwischen dem Übergabemodul und dem zweiten Modul einfach einstellen, so dass der eingestellte Abstand dann innerhalb eines Abstandssollbereiches liegt.

Bei der erfindungsgemäßen Vorrichtung ist als Justiermittel ein Justierbolzen und eine Ausnehmung vorgesehen, in die der Justierbolzen eingreift. Der Justierbolzen und/oder die Ausnehmung weisen eine solche Einstellkonturierung auf, das in Abhängigkeit von der Relativlage des Justierbolzens zu einem Übergabemodul unterschiedliche Justierlagen des Übergabemoduls relativ zu dem zweiten Modul einstellbar sind. Zum Ausgleich von Toleranzabweichungen der im zweiten Modul verbauten Bauteile kann eine Einstellkonturierung ausgewählt werden, so dass eine Ausrichtung des Übergabemoduls zu dem benachbarten Modul unter Bildung eines Abstandes zwischen denselben innerhalb des Abstandssollbereichs erfolgen kann.

Nach einer bevorzugten Ausführungsform der Erfindung weist der Justierbolzen eine in Umfangsrichtung in einem unterschiedlichen radialen Abstand zu einer Achse des Justierbolzens angeordnete Einstellkonturen auf. Durch Verdrehen des Justierbolzens lassen sich somit Einstellkonturen "anwählen". Zum Einrichten oder zum Warten des Selbstbedienungsgerätes kann der Monteur nach Feststellen des aktuellen Abstands die geeignete Einstellkontur des Justierbolzens auswählen und dann den Justierbolzen in fluchtende Öffnungen des Übergabemoduls und eines an das zweite oder erste Modul ansetzenden Lagermittels einstecken, wobei die gewählte Einstellkontur eine Relativverschiebung des Lagermittels zu dem Übergabemodul bewirkt.

Nach einer Weiterbildung der Erfindung weist der Justierbolzen stirnseitig Anzeigeelemente zur Kodierung der Einstellkonturen auf, so dass ein Monteur einfach den aktuell eingestellten Justierlagenabstand zwischen den Modulen feststellen und in Abhängigkeit von der Abstandsprüfung einfach eine passende Einstellkontur auswählen kann. Vorteilhaft kann hierdurch der Justiervorgang beschleunigt werden.

Nach einer Weiterbildung der Erfindung ist der Justierbolzen quer zur Justierrichtung in Öffnungen eines fest mit dem zweiten Modul gekoppelten Lagerteil und des Übergabemoduls gelagert. Der Justierbolzen kann einfach in axialer Richtung aus den fluchtend zueinander angeordneten Öffnungen entfernt und in einer bestimmten Drehposition wieder in dieselben eingeführt werden.

Nach einer Weiterbildung der Erfindung ist der Justierbolzen mittels eines quer zur Achse des Justierbolzens bewirkenden Klemmkraft aufweisenden Rastelementes in axialer Richtung gesichert.

Nach einer Weiterbildung der Erfindung weist das Lagermittel ein widerhakenförmiges Rastelement zum Hintergreifen eines Gestellteils in der Betriebsstellung auf. Dieses Rastelement wird durch ein Verschiebeelement des Übergabemoduls in der Klemmstellung gesichert. Auf diese Weise ist die Einbaulage des Übergabemoduls eindeutig gesichert.

Nach einer alternativen Ausführungsform der Vorrichtung kann die Einstellkonturierung auch durch eine gestufte Ausbildung einer Längsausnehmung des Übergabemoduls gebildet sein. In Verbindung mit einem fest mit einem Lagermittel gekoppelten Justierbolzen, der in die Längsausnehmung eingreift, ist eine Raste gebildet, die beispielsweise eine Höhenausrichtung des Übergabemoduls zu dem zweiten oder ersten Modul ermöglicht. Vorteilhaft braucht der Justierbolzen zur Einstellung des Abstandes zwischen den benachbarten Modulen nicht entfernt werden. Durch Ausübung einer auf das Übergabemodul wirkenden Verstellkraft in Richtung der Längsausnehmung kann die gewünschte Einbaulage des Übergabemoduls schnell eingestellt werden.

Der besondere Vorteil des erfindungsgemäßen Verfahrens besteht darin, dass durch Einstellen eines an ein Übergabemodul angreifende Justiermittels einfach die Einbaulage des Übergabemoduls in einer Richtung eingestellt werden kann, wobei der Abstand des Übergabemoduls zu dem benachbartem Modul innerhalb des Abstandssollbereiches liegt.

Weitere Vorteile der Erfindung ergeben sich aus den weiteren Unteransprüchen.

Es zeigen:

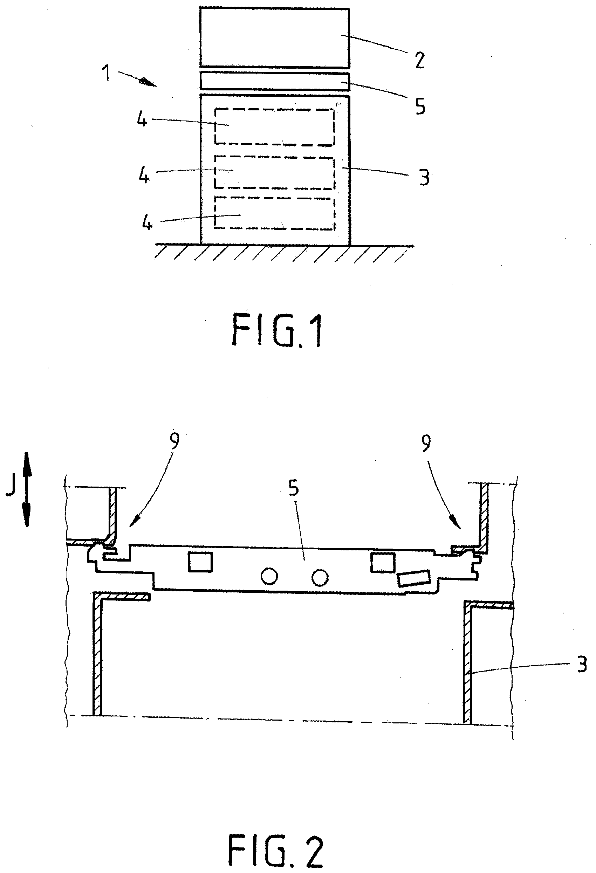

Figur 1 eine Seitenansicht eines Selbstbedienungsgerätes mit einem oberen ersten Modul, einem unteren zweiten Modul sowie einem zwischen dem ersten Modul und dem zweiten Modul angeordneten Übergabemodul,
   dem ersten Modul und dem zweiten Modul angeordneten Übergabemodul,
Figur 2 eine Seitenansicht des Selbstbedienungsgerätes, in der das Übergabemodul in einer Einbaulage an Befestigungswänden des zweiten Moduls eingehängt ist,

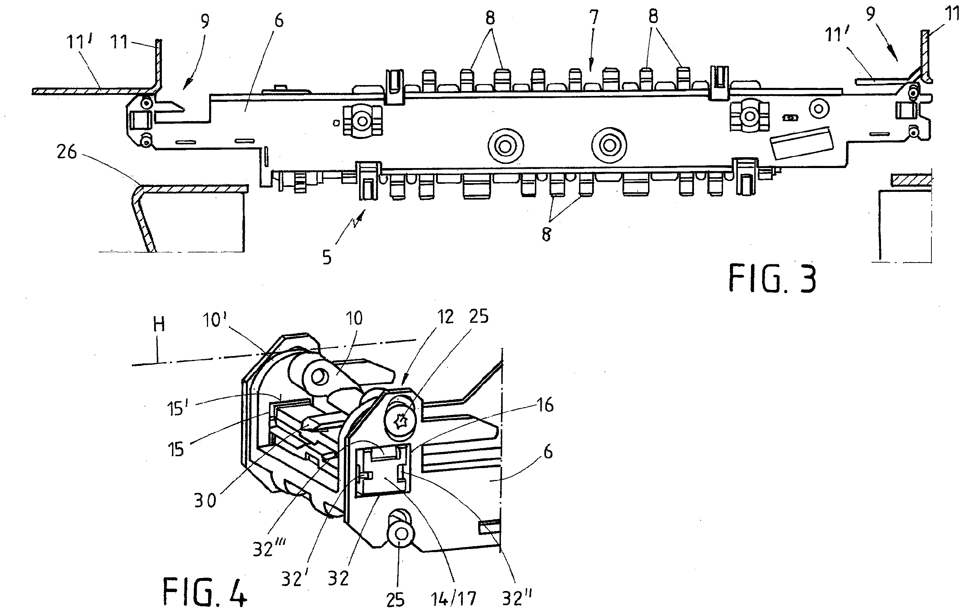

Figur 3 eine detaillierte Vorderansicht des Übergabemoduls in seiner Einbaulage,
Figur 4 eine perspektivische Darstellung des Übergabemoduls in einem Endbereich desselben, in dem an dem Übergabemodul ein Lagerteil befestigt ist,
Figur 5a eine Teilansicht des Übergabemoduls in einer oberen Justierlage,
Figur 5b eine Teilansicht des Übergabemoduls in einer unteren Justierlage,
Figur 6 eine Seitenansicht eines durch Öffnungen des Übergabemoduls und eines Lagerteils durchsteckbaren Justierbolzens mit einer Einstellkonturierung,
Figur 7 eine Stirnansicht des Justierbolzens mit jeweils den Längsseiten zugeordneten unterschiedlichen Einstellkonturierungen,
Figur 8a eine vergrößerte Darstellung eines Verschiebeelementes des Übergabemoduls in einer Stellung vor Festlegen eines Rastelementes des Lagerteils an eine Befestigungswand,
Figur 8b eine vergrößerte Darstellung des Verschiebeelementes des Übergabemoduls in der Montagestellung des Lagerteils an einer Befestigungswand,
Figur 9 eine Teilansicht im Endbereich eines Übergabemoduls nach einer zweiten Ausführungsform und
Figur 10 einen Teilschnitt durch einen Justierbolzen nach der zweiten Ausführungsform.

Die Erfindung kann auf Selbstbedienungsgeräte, wie beispielsweise Geldautomaten, Kassensysteme oder dergleichen angewendet werden, bei denen Wertscheine von einem ersten Modul zu einem zweiten Modul gefördert werden sollen, wobei die Module vorzugsweise unterschiedliche Funktionen aufweisen. Im vorliegenden Ausführungsbeispiel ist als Selbstbedienungsgerät ein Geldautomat 1 vorgesehen, der im Wesentlichen ein erstes Modul 2 zur Ein- und/oder Ausgabe von Wertscheinen (Banknoten) und eine in vertikaler Richtung unterhalb des ersten Moduls angeordnetes zweites Modul 3 zur Aufnahme von einer Mehrzahl von Geldkassetten 4 aufweist. Das erste Modul 2 ist als ein Kopfmodul ausgebildet, während das zweite Modul 3 als ein Tresor ausgebildet ist. Zur Übergabe der Wertscheine von dem Kopfmodul 2 zur dem Tresor 3 oder umgekehrt ist ein Übergabemodul 5 vorgesehen, dass im Wesentlichen zwischen dem Kopfmodul 2 und dem Tresor 3 angeordnet ist.

Das Übergabemodul 5 ist stabförmig ausgebildet und weist aufrechte Gehäusewandungen 6 auf, die einen Rahmen bilden für einen in Längsrichtung des Übergabemoduls 5 erstreckenden Übergabeschlitz 7. Zu beiden Seiten des Übergabeschlitzes 7 sind eine Mehrzahl von fingerförmigen Führungselementen 8 angeordnet, damit die Wertscheine in Richtung einer vertikalen Übergabeebene durch den Übergabeschlitz 7 geführt werden.

Das Übergabemodul 5 ist in einer Betriebsstellung über jeweils in einem Endbereich 9 des Übergabemoduls 5 mit demselben verbundene Lagermittel 10 an einer fest mit dem Tresor 3 verbundenen Befestigungswand 11 gehalten bzw. montiert. Als Lagermittel 10 ist ein durch Verschraubung 12 mit der Gehäusewandung 6 des Übergabemoduls 5 lösbar verbundenes Lagerteil vorgesehen, das an einer Oberseite eine Klemmfläche 10' aufweist, die mit einem von der Befestigungswand 11 abragenden Halteelement so zusammenwirkt, dass das Lagerteil 10 unter Anlage der Klemmfläche 10' an einem horizontal Abschnitt 11' der Befestigungswand 11 klemmend anliegt. Das Übergabemodul 5 ist in der Einbaulage horizontal angeordnet, wobei die in den gegenüberliegenden Endbereichen 9 verlaufenden Klemmflächen 10' eine horizontale Ebene H aufspannen.

Damit eine ordnungsgemäße Übergabe der Wertscheine von dem Kopfmodul 2 zu dem Tresor 3 oder umgekehrt gewährleistet ist, darf das Übergabemodul 5 nur innerhalb eines vorgegebenen Sollabstandbereiches zu dem Tresor 3 angeordnet sein. Im vorliegenden Ausführungsbeispiel dient der Tresor 3 als Referenz. Alternativ ist es selbstverständlich auch möglich, einen maximalen Sollabstand zu dem Kopfmodul 2 festzulegen.

Zur Einstellung eines Abstandes zwischen dem Übergabemodul 5 und dem Tresor 3 in der Höhe (vertikale Richtung) ist an den Endbereichen 9 (Lagerstellen) des Übergabemoduls 5 jeweils als Justiermittel ein Justierbolzen 14 vorgesehen, der mit seinen gegenüberliegenden Endbereichen jeweils eine Öffnung 15 des Lagerteils 10 durchgreift und in eine Öffnung 16 der Gehäusewandung 6 eingreift. Ein sich unmittelbar an eine Stirnseite 17 des Justierbolzens 14 anschließender erster Umfangsbereich 18 desselben ist im Wesentlichen quadratisch mit vier Längsseiten 20 ausgebildet, so dass dieser mit Spiel in der Öffnung 16 der Gehäusewandung 6 unter Anlage an einem Rand 16' der Öffnung 16 anliegt. Auf einer der Stirnseite 17 abgewandten Seite des ersten Umfangsabschnitts 18 schließt sich in axialer Richtung ein zweiter Umfangsabschnitt 19 des Justierbolzens 14 an, der eine zu den Längsseiten 20 des Justierbolzens 14 im ersten Umfangsabschnitt 18 in unterschiedlicher Höhe verlaufende Erhebungsflanken 21, 21', 21" aufweist. Diese weisen eine unterschiedliche Erhabenheit relativ zu der axial benachbarten Kontur des ersten Umfangsabschnitts 18 bzw. zu einer Achse A des Justierbolzens 14 auf.

Die Erhebungsflanken 21, 21', 21" bilden fest vorgegebene Einstellkonturen, mittels derer das Lagerteil 10 in vertikaler Richtung relativ zu dem Übergabemodul 5 bzw. seiner Gehäusewandung 6 verstellt werden kann. Der zweite Umfangsabschnitt 19 ist somit als ein Erhebungsring ausgebildet, der im vorliegenden Ausführungsbeispiel unterschiedliche Justierstellungen des Übergabemoduls 5 zu dem Tresor 3 bewirken kann. Eine erste Einstellkontur 22 des Erhebungsrings weist keinen radialen Relativabstand zu der axial benachbarten Längsseite 20 des ersten Umfangsabschnitts 18 auf. Soll diese Einstellkontur 22 wirksam sein, befindet sich der Justierbolzen 14 in einer Drehlage, in der diese Einstellkontur 22 vertikal nach oben angeordnet ist. Die Einstellkontur 22 liegt an dem oberen Öffnungsrand 15' des Lagerteils 10, die Längsseite 20 im ersten Umfangsabschnitt 18 liegt an dem Öffnungsrand 16' des Übergabemoduls 5 an. Die beiden Öffnungsränder 15', 16' des Lagerteils 10 bzw. des Übergabemoduls 5 verlaufen somit in der gleichen horizontalen Ebene.

In Umfangsrichtung zu der Einstellkontur 22 schließen sich im zweiten Umfangsabschnitt 19 weitere Erhebungsflanken 21, 21', 21" unterschiedlicher Höhe zu den jeweils als Referenz dienenden Längsseiten 20 des ersten Umfangsabschnitts 18 an. Eine erste Erhebungsflanke 21 weist eine Einstellkontur 22' auf, die einen Abstand von a₁ = 0,4 mm zu der Längsseite 20 aufweist. Eine zweite Erhebungsflanke 21' weist eine Einstellkontur 22" auf, die in einem Abstand von a₂ = 0,8 mm zu der Längsseite 20 des benachbarten ersten Umfangsabschnitts 18 angeordnet ist. Eine dritte Erhebungsflanke 21" weist eine Einstellkontur 22''' auf, die in einem Abstand a₃ = 1,2 mm zu der Längsseite 20 des benachbarten ersten Umfangsabschnitts 18 angeordnet ist.

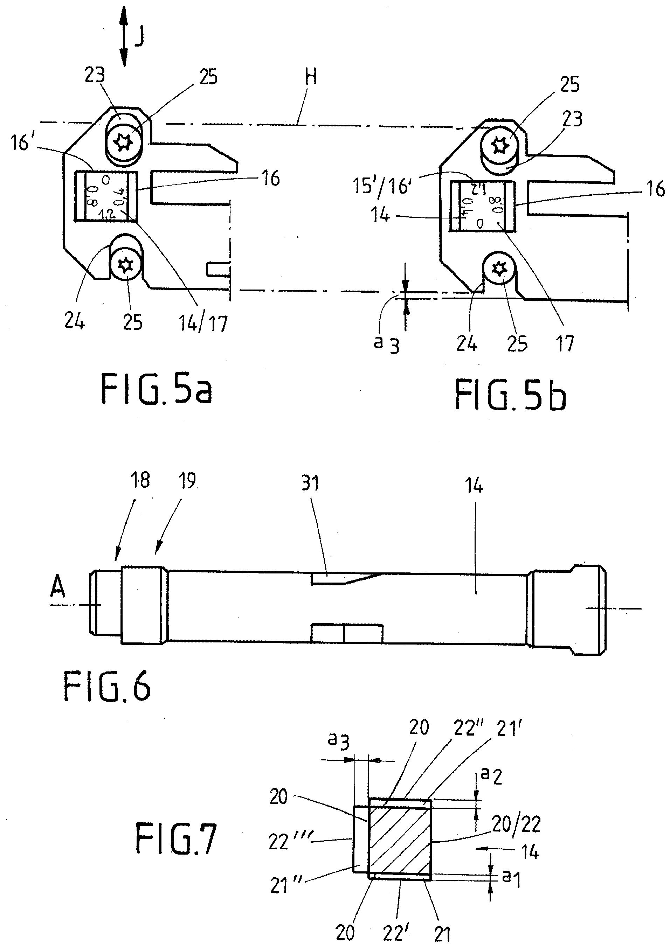

Die Längsseiten 20 im ersten Umfangsbereich 18 bilden eine Bezugskante für eine stufige Justierung bzw. Einstellung der Relativlage zwischen dem Übergabemodul 5 und dem Tresor 3. Wird der Justierbolzen 14 beispielsweise in einer
solchen Drehlage unter Eingreifen in die Öffnungen 15 des Lagerteils 10 und der Öffnung 16 der Gehäusewandung 6 eingesetzt, dass die dritte Einstellfläche 21''' obenseitig angeordnet ist, bewirkt dies eine Relativerhöhung des Lagerteils 10 um a₃=1,2mm zu dem Übergabemodul 5. Da das Lagerteil 10 in der Einbaulage an der Befestigungswand 11' des Tresors 3 anliegt, wird hierdurch der Abstand zwischen dem Übergabemodul 5 und dem Tresor 3 um a₃=1,2mm verkleinert im Vergleich zu einer Drehstellung des Justierbolzens 14, in der die Einstellkontur 22 des Justierbolzens 14 obenseitig angeordnet ist, siehe Fig. 5a und Fig. 5b. Die horizontale Ebene H gibt die Befestigungshöhe des Lagerteils 10 an dem zweiten Modul 3 an, zu der senkrecht die Justierrichtung J verläuft.

Damit das Übergabemodul 5 an dem als ein Adapter dienenden Lagerteil 10 in jeder Justierstellung des Justierbolzens 14 festlegbar ist, weist die Gehäusewandung 6 des Übergabemoduls 5 in den Endbereichen 9 jeweils ein Langloch 23 und eine Längsnut 24 auf, die in den Justierrichtung J, also in vertikaler Richtung, orientiert angeordnet sind. Durch das Langloch 23 und die Längsnut 24 kann jeweils eine Schraube 25 eingreifen und unter Bildung eines Gewindeeingriffs mit einer Bohrung des benachbarten Lagerteils 10 das Übergabemodul 5 an dem Lagerteil 10 festlegen.

Damit der Justierbolzen 14 nach Feststellung eines unzulässig großen Abstandes zwischen dem Tresor 3 und dem Übergabemodul 5 in seiner Drehstellung verändert werden kann, wird das Übergabemodul 5 aus seiner Betriebsstellung relativ zu dem ortsfest angeordneten Tresor 3 in eine Nichtbetriebsstellung verschoben. Hierzu ist das Übergabemodul 5 über nicht dargestellte Schienen gegenüber dem Tresor 3 gelagert. In der Betriebsstellung des Übergabemoduls 5 sind an dem Geldautomaten Wertscheine einzahlbar und/oder auszahlbar. In der Nichtbetriebsstellung des Übergabemoduls 5 ist das Übergabemodul 5 von dem Tresor 3 demontierbar. Hierzu wird das Übergabemodul 5 in seiner Längsrichtung relativ zu der Befestigungswand 11 unter Außereingriffbringung einer Arretierung verschoben, nach unten bewegt, bis es auf einer unteren Befestigungswand 26 abgestützt ist, nachfolgend um eine in einem Endbereich 9 des Übergabemoduls 5 verlaufenden horizontalen Achse verdreht und nach oben hin von dem Tresor 3 entfernt.

In einem weiteren Schritt werden nun die Befestigungsmittel gelöst, die das Übergabemodul 5 mit dem Lagerteil 10 lösbar verbinden. Im vorliegenden Ausführungsbeispiel sind als Befestigungsmittel Schrauben 25 vorgesehen, die in dem Langloch 23 oder in einer Längsnut 24 des Übergabemoduls 5 sowie in Bohrungen des Lagerteils 10 eingreifen. Das Langloch 23 sowie die Längsnut 24 sind in Justierrichtung J orientiert angeordnet. Nach dem Lösen bzw.

Lockern der Schrauben 25, ohne dass sie die Gewindebohrung des Lagerteils 2 verlassen, wird ein Rastelement 30 des Lagerteils 10 entriegelt, das in seiner Verriegelungsstellung den Justierbolzen 14 in Querrichtung unter Eingreifen in einer Rastmulde 31 hintergreift und in axialer Richtung sichert. Nachfolgend kann der Justierbolzen 14 in seiner axialen Richtung von dem Lagerteil 10 bzw. dem Übergabemodul 5 entfernt werden.

Nachfolgend wird der Justierbolzen 14 um seine Achse A so verdreht, dass eine Erhebungsflanke 21, 21', 21" solcher Höhe in vertikaler Richtung oben angeordnet ist, dass im eingesetzten Zustand des Justierbolzen 14 das Lagerteil 10 relativ zu dem Übergabemodul 5 so weit in vertikaler Richtung nach unten verschoben ist, dass der hierdurch eingestellte aktuelle Abstand kleiner ist als ein vorgegebener Maximalabstand. Als Referenz dient die obere Längsseite 20 des Justierbolzens 14 im ersten Umfangsbereich 18, die an dem oberen Öffnungsrand 16' der Öffnung 16 des Übergabemoduls 5 anliegt.

Die aktuell eingestellte Relativ-Höheneinstellung zwischen dem Übergabemodul 5 und dem Lagerteil 10 kann durch eine an der Stirnseite 17 des Justierbolzens 14 angebrachte Kodierung erkannt werden. Zu diesem Zweck weist die Stirnseite 17 jeweils den Längsseiten 20 zugeordnete unterschiedlich große Einkerbungen 32', 32", 32''' als Anzeigeelemente auf. Ist einer Längsseite keine Einkerbung zugeordnet, liegt eine Null-Erhöhung vor. Eine kleine Einkerbung 32' korrespondiert zu einer Erhöhung um a₁ = 0,4 mm, eine mittlere Einkerbung 32" zu einer Erhöhung um a₂ = 0,8 mm und eine große Einkerbung 32''' zu einer Erhöhung um a₃ = 1,2 mm. Nachdem der Justierbolzen 14 lagerichtig unter Eingreifen in die Öffnungen 15, 16 eingesetzt worden ist, greifen die Rastelemente 30 wieder in die Rastmulde 31 ein. Vorzugsweise schließen die Stirnseiten 17 des Justierbolzen 14 bündig zu einer Außenseite der Gehäusewandung 6 des Übergabemoduls 5 ab. Abschließend werden die Schrauben 25 festgedreht, so dass das mit dem Lagerteil 10 verbundene Übergabemodul 5 nun wieder an dem Tresor 3 montiert werden kann.

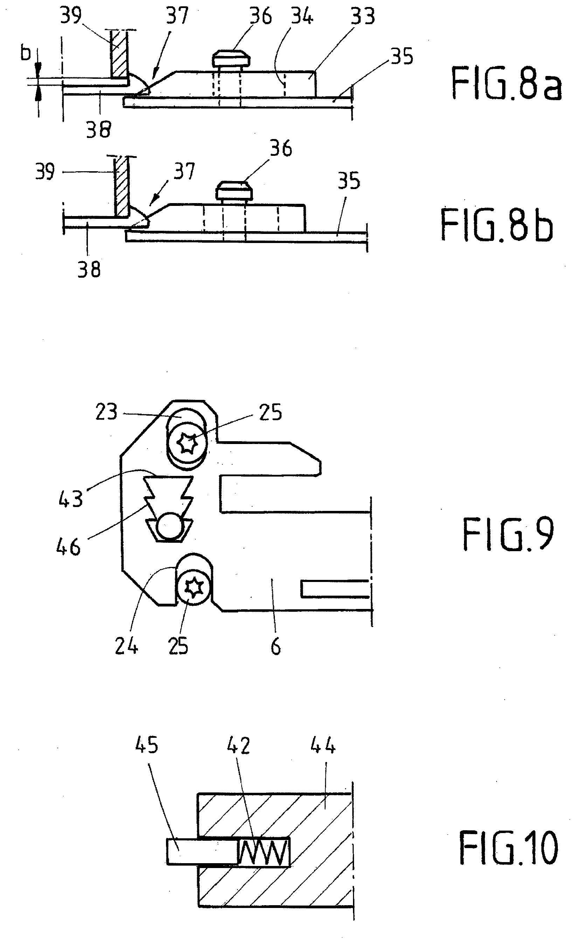

Befindet sich das Übergabemodul 5 in der Montagestellung an dem Tresor 3, wird es mittels eines verjüngend verlaufenden Verschiebeelementes 33 in der Montagestellung an dem Tresor 3 gesichert. Das Verschiebeelement 33 weist ein Langloch 34 auf, in dem eine in Gewindeeingriff mit einer horizontalen Gehäusewandung 35 des Übergabemoduls 5 in Schraubeingriff befindlichen Schraube 36 geführt ist. Das Verschiebeelement 33 weist ein keilförmiges En de 37 auf, das zur Arretierung des Übergabemoduls 5 an dem Tresor 3 ein widerhakenförmiges Rastelement 38 des Lagerteils 10 hintergreift und gegen ein ortsfest angeordnetes Gestellteil 39 des Tresors 3 drückt. Die in Figur 8 b dargestellte Arretierstellung des Verschiebeelementes 33 wird durch Festdrehen der Schraube 36 gesichert, so dass das Verschiebeelement 33 in der Arretierstellung festgelegt ist. Das Rastelement 38 ist vorzugsweise um eine vertikale Distanz b = 0,5 mm beweglich angeordnet.

Nach einer alternativen Ausführungsform der Erfindung kann statt eines starr ausgebildeten Justierbolzens 14 ein mit nachgiebigen Enden 45 ausgebildeter Justierbolzen 44 vorgesehen sein, der mit einen eine Einstellkonturierung 46 aufweisenden Längsausnehmung 43 der vertikal verlaufenden Gehäusewand 6 des Übergabemoduls 5 zusammenwirkt. Gleiche Bauteile bzw. Bauteilfunktionen der beiden Ausführungsbeispiele sind mit den gleichen Bezugsziffern versehen.

Die Längsausnehmung 43 des Übergabemoduls 5 weist tannenförmige Einstellkonturen 46 auf, die eine stufige rastende Lagerung der Enden 45 des Justierbolzens 44 ermöglichen. Befindet sich das Lagerteil 10 mit dem Justierbolzen 44 in der in Figur 9 dargestellten Einbaulage, kann durch Angreifen einer Vertikalkraft auf das Übergabemodul 5 bzw. auf die Gehäusewandung 6 desselben nach unten das Übergabemodul 5 relativ zu dem Lagerteil 10 entsprechende der von der Einstellkonturierung 46 vorgegebenen Raststufen nach unten bewegt werden. Auf diese Weise kann handhabungstechnisch einfach durch eine solche Raste - ohne Entfernen des Justierbolzen 44 von dem Übergabemodul 5 bzw. dem Lagerteil 10 - eine relative Höheneinstellung des Übergabemoduls 5 zu dem Tresor 3 erfolgen.

Die Enden 45 des Justierbolzens 44 sind in axialer Richtung federnd gelagert, so dass durch Anwendung einer Axialkraft die Enden 45 so aufeinander zu bewegt werden können, dass der Justierbolzen 44 zwischen den gegenüberliegenden Gehäusewandungen 6 des Übergabemoduls 5 und Stirnflächen des Lagerteils 10 eingesetzt werden kann, und zwar bis die Enden 45 fluchtend zu den Öffnungen 15, 16 des Übergabemoduls 5 bzw. des Lagerteils 10 angeordnet sind. Nun können die Enden 45 selbsttätig aufgrund der Federkraft 42 in die Öffnungen 15, 16 eingreifen und haben dann die Arretierposition erreicht. Die Länge der federnd ausgebildeten Enden 45 ist mindestens so groß wie die Dicke der Gehäusewandung 6 des Übergabemoduls 5 und der Stirnfläche des Lagerteils 10.

In dem Übergabemodul 5 ist vorzugsweise ein Motor zum Antrieb von in demselben angeordneten Transportwellen für die Wertscheine vorgesehen.

Alternativ kann die Justierrichtung J auch in horizontaler Richtung oder in eine andere Richtung verlaufen. Hierzu müssten das Übergabemodul 5 und die Lagermittel 10 entsprechend anders orientiert gelagert sein.

**Bezugszeichenliste**

| | | | |
|---|---|---|---|
| 1 | Geldautomat | 24 | Längsnut |
| 2 | 1. Modul | 25 | Schrauben |
| 3 | 2. Modul (Tresor) | 26 | Befestigungswand |
| 4 | Geldkassetten | 27 | |
| 5 | Übergabemodul | 28 | |
| 6 | Gehäusewandung | 29 | |
| 7 | Übergabeschlitz | 30 | Rastelemente |
| 8 | Führungselemente | 31 | Rastmulde |
| 9 | Endbereich | 32', 32", 32''' | Einkerbungen |
| 10, 10' | Lagermittel / Lagerteil/Klemmfläche | 33 | Verschiebeelement |
| 11, 11' | Befestigungswand/ Horizontalabschnitt | 34 | Langloch |
| 12 | Verschraubung | 35 | Gehäusewandung |
| | | 36 | Schrauben |
| 14 | Justierbolzen | 37 | Keilförmiges Ende |
| 15, 15' | Öffnung | 38 | Rastelement |
| 16, 16' | Öffnung | 39 | Gestellteil |
| 17 | Stirnseite | 40 | |
| 18 | 1. Umfangsbereich | | |
| 19 | 2. Umfangsbereich | 42 | Feder |
| 20 | Längsseiten | 43 | Längsausnehmung |
| 21, 21', 21''' | Erhebungsflanken | 44 | Justierbolzen |
| 22, 22', 22", 22''' | Einstellkontur | 45 | Ende |
| 23 | Langloch | 46 | Einstellkontierung |
| H | Höhe der Klemmfläche 10' | | |
| A | Achse | | |
| a | Abstand | | |
| J | Justierrichtung | | |

## Patentansprüche

1. Vorrichtung zum Justieren einer Einbaulage von Modulen in einem Selbstbedienungsgerät (1), das ein erstes Modul (2), ein zweites Modul (3) und ein Übergabemodul (5) mit einem Übergabeschlitz (7) zur Übergabe von Wertscheinen von dem ersten Modul (2) zu dem zweiten Modul (3) oder vice versa aufweist, wobei das Übergabemodul über Befestigungsmittel in einer Betriebsstellung unter Bildung eines Abstandes zu dem zweiten Modul gehalten ist, wobei dem Übergabemodul (5) Justiermittel (14; 43, 44) derart zugeordnet sind, dass das Übergabemodul (5) unter Bildung unterschiedlicher Abstände (a₁, a₂, a₃) zu dem zweiten Modul (3) in einer senkrecht zu dem Übergabeschlitz (7) verlaufenden und in einer durch den Übergabeschlitz (7) vorgegebenen Übergabeebene der Wertscheine verlaufenden Justierrichtung (J) verstellbar gelagert ist, wobei die Justiermittel (14; 43, 44) in einem Bereich des Übergabemoduls (5) angeordnet sind, in dem das Übergabemodul (5) über Lagermittel (10) lösbar mit dem zweiten Modul (3) gekoppelt ist, **dadurch gekennzeichnet, dass** als Justiermittel ein Justierbolzen (14, 44) einerseits und eine Ausnehmung (15, 16, 43) des Übergabemoduls (5) und/oder des Lagermittels (10) andererseits vorgesehen sind, wobei der Justierbolzen (14) und/oder die Ausnehmung (43) eine solche Einstellkonturierung (22, 46) aufweisen, dass in Abhängigkeit von der Relativlage des Justierbolzens (14, 44) zu der Ausnehmung (15, 16, 43) das Übergabemodul (5) relativ zu dem zweiten Modul (3) und/oder dem ersten Modul (2) in Justierrichtung (J) einstellbar ist.

2. Vorrichtung nach Anspruch 1, **dadurch gekennzeichnet, dass** eine Gehäusewandung (6) des Übergabemoduls (5) eine Öffnung (16) aufweist, in die ein Ende (17, 45) des Justierbolzens (14, 44) einsteckbar gelagert ist, dass der Justierbolzen (14) in Umfangsrichtung verteilt und in einem unterschiedlichen radialen Abstand zu einer Achse (A) des Justierbolzens (14) angeordnete Einstellkonturen (22, 22', 22", 22"') aufweist, so dass in Abhängigkeit von einer Drehstellung des Justierbolzens (14) relativ zu dem Übergabemodul (5) dasselbe in eine unterschiedliche Justierlage relativ zu dem zweiten Modul (3) und/oder zu dem ersten Modul (2) bringbar ist.

3. Vorrichtung nach Anspruch 2, **dadurch gekennzeichnet, dass** die Einstellkonturen (22, 22', 22", 22''') in einem zu einer Öffnung (15) des Lagermittels (10) korrespondierende zweiten Umfangsabschnitt (19) des Justierbolzens (14) angeordnet sind, wobei die Einstellkonturen (22, 22', 22", 22''') durch Erhebungsflanken (21, 21', 21") unterschiedlicher Erhabenheit zu Konturen (20) des Justierbolzens (14) in einem zu der Öffnung (16) der Gehäusewandung (6) korrespondierenden ersten Umfangsabschnittes (18) des Justierbolzens (14) gebildet sind.

4. Vorrichtung nach Anspruch 3, **dadurch gekennzeichnet, dass** die Justierrichtung (J) in vertikaler Richtung verläuft und dass der einstellbare Abstand (a₁, a₂, a₃) durch einen Höhenversatz der im zweiten Umfangsbereich (19) befindlichen Erhebungsflanke (21, 21', 21 ") zu der Kontur (20) des Justierbolzens (14) im ersten Umfangsbereich (18) vorgegeben ist, wobei jeweils die dem oberen Öffnungsrand (15') des Lagermittels (10) zugeordnete Erhebungsflanke (21, 21', 21 ") wirksam ist.

5. Vorrichtung nach einem der Ansprüche 2 bis 4, **dadurch gekennzeichnet, dass** der Justierbolzen (14) an einer Stirnseite (17) Anzeigeelemente (32, 32', 32", 32''') zur Kennzeichnung der unterschiedlichen Einstellkonturierungen (22, 22', 22", 22"') desselben aufweist.

6. Vorrichtung nach einem der Ansprüche 2 bis 5, **dadurch gekennzeichnet, dass** die Gehäusewandung (6) des Übergabemoduls (5), die senkrecht zum Justierbolzen (14) verläuft, ein in Justierrichtung (J) verlaufendes Langloch (23) und/oder eine Längsnut (24) aufweist, so dass im Zusammenwirken mit einem Befestigungsbolzen (25) das Übergabemodul (5) in Justierrichtung (7) verschiebbar zu dem Lagermittel (10) befestigbar ist.

7. Vorrichtung nach einem der Ansprüche 2 bis 6, **dadurch gekennzeichnet, dass** das Lagermittel (10) ein auf den Justierbolzen (14) einwirkendes Rastelement (30) aufweist zur Erzeugung einer quer zur Achse (A) des Justierbolzens (14) gerichteten Klemmkraft.

8. Vorrichtung nach einem der Ansprüche 2 bis 7, **dadurch gekennzeichnet, dass** zur Arretierung des Übergabemoduls (5) in der Betriebsstellung das Lagermittel (10) ein widerhakenförmiges Rastelement (38) und das Übergabemodul (5) ein Verschiebelement (33) mit einem verjüngenden Ende (37) aufweist, wobei das widerhakenförmige Rastelement (38) mittels des verjüngend verlaufenden Verschiebelementes (33) an einem Gestellteil (39) des zweiten Moduls (3) unter Hintergreifen desselben klemmend gehalten ist.

9. Vorrichtung nach Anspruch 2, **dadurch gekennzeichnet, dass** die Ausnehmung (43) der Gehäusewandung (6) des Übergabemoduls (5) eine Mehrzahl von in Justierrichtung (J) verlaufende Einstellkonturen (46) aufweist, so dass durch Relativverschiebung des Übergabemoduls (5) zu dem Lagermittel (10) in Justierrichtung (J) die Justierlage des Übergabemoduls (5) zu dem zweiten Modul (3) einstellbar ist.

10. Vorrichtung nach Anspruch 9, **dadurch gekennzeichnet, dass** die Ausnehmung (43) als eine tannenförmige Längsausnehmung (43) ausgebildet ist und dass der Justierbolzen (44) mit seinem Ende (45) rastend in der Längsausnehmung (43) gelagert ist.

11. Vorrichtung nach Anspruch 10, **dadurch gekennzeichnet, dass** das Ende (45) des Justierbolzens (44) in Axialrichtung (A) desselben federnd gelagert ist.

12. Vorrichtung nach Anspruch 11, **dadurch gekennzeichnet, dass** die Justiermittel (14; 43, 44) derart ausgebildet sind, dass das Übergabemodul (5) stufig verstellbar in Justierrichtung (J) gelagert ist.

13. Vorrichtung nach Anspruch 12, **dadurch gekennzeichnet, dass** sich das Übergabemodul (5) stabförmig quer zur Justierrichtung (J) erstreckt und dass dem Übergabeschlitz (7) des Übergabemoduls (5) Führungsmittel (8) zugeordnet sind zur Führung der Wertscheine bei der Übergabe von dem ersten Modul (2) zu dem zweiten Modul (3) oder vice versa.

14. Verfahren zum Justieren einer Einbaulage von Modulen in einem Selbstbedienungsgerät, wobei ein Übergabemodul zur Übergabe von Wertscheinen von einem ersten Modul zu einem zweiten Modul eines Selbstbedienungsgerätes oder vice versa vorgesehen ist, wobei durch Justiermittel (14; 43, 44) ein Relativabstand in Justierrichtung (J) zwischen dem Übergabemodul (5) einerseits und dem ersten Modul (2) und/oder einem mit dem zweiten Modul (3) lagefest verbindbaren Lagermittel (10) andererseits derart eingestellt wird, dass der Abstand (a₁, a₂, a₃) des Übergabemoduls (5) in seiner Einbaulage zu dem ersten Modul (2) und/oder dem zweiten Modul (3) kleiner ist als ein vorgegebener Maximalabstand,
**dadurch gekennzeichnet, dass** der Relativabstand zwischen dem Übergabemodul (5) und dem Lagermittel (10) in Abhängigkeit von einer Drehstellung des Justiermittels (14) eingestellt wird, wobei das Justiermittel (14) in Umfangsrichtung unterschiedlich erhabene Einstellkonturen (22, 22', 22", 22''') aufweist, die auf das Lagermittel (10) im Sinne einer Relativverschiebung in Justierrichtung (J) zu dem Übergabemodul (5) einwirken, und
dass der wählbare Abstand (a₁, a₂, a₃) des Übergabemoduls (5) zu dem zweiten Modul (2) in der Einbaulage durch lineare Relativverschiebung des Übergabemoduls (5) zu dem zweiten Modul (3) in Justierrichtung (J) erfolgt, wobei das mit dem zweiten Modul (3) gekoppelte Justiermittel (44) in einer in Justierrichtung (J) verlaufenden Rastausnehmung (43) des Übergabemoduls (5) stufig verstellt wird.

## Claims

1. An apparatus for adjusting an installation position of modules in a self-service device (1) which comprises a first module (2), a second module (3) and a transfer module (5) with a transfer slot (7) for transferring notes of value from the first module (2) to the second module (3) or vice versa, the transfer module being held in an operating position by fastening means while forming a spacing to the second module, wherein adjusting means (14; 43, 44) are associated with the transfer module (5) in such a manner that the transfer module (5), by forming different spacings (a₁, a₂, a₃) to the second module (3), is mounted so as to be adjustable in an adjusting direction (J) that extends perpendicularly with respect to the transfer slot (7) and in a transfer plane of the notes of value which is predefined by the transfer slot (7), wherein the adjusting means (14; 43, 44) are arranged in a region of the transfer module (5) in which the transfer module (5) is releasably coupled with the second module (3) by bearing means (10), **characterized in that** as adjusting means an adjusting bolt (14, 44) on the one hand and a recess (15, 16, 43) of the transfer module (5) and/or of the bearing means (10) on the other hand are provided, wherein the adjusting bolt (14) and/or the recess (43) comprise such an adjusting contouring (22, 46) that, in dependence on the relative position of the adjusting bolt (14, 44) to the recess (15, 16, 43), the transfer module (5) is adjustable in the adjusting direction (J) relative to the second module (3) and/or to the first module (2).

2. The apparatus of claim 1, **characterized in that** a housing wall (6) of the transfer module (5) has an opening (16), one end (17, 45) of the adjusting bolt (14, 44) being mounted so as to be insertable into said opening, that the adjusting bolt (14) comprises adjusting contours (22, 22' , 22" , 22''') that are distributed in the circumferential direction and are arranged at a different radial spacing to an axis (A) of the adjusting bolt (14) so that, in dependence on a position of rotation of the adjusting bolt (1) relative to the transfer module (5), said transfer module (5) is movable into a different adjusting position relative to the second module (3) and/or to the first module (2).

3. The apparatus according to claim 2, **characterized in that** the adjusting contours (22, 22' , 22" , 22''') are arranged in a second circumferential portion (19) of the adjusting bolt (14) that corresponds to an opening (15) of the bearing means (10), wherein the adjusting contours (22, 22' , 22" , 22''') are formed by elevation flanks (21, 21', 21") of different elevation to contours (20) of the adjusting bolt (14) in a first circumferential portion (18) of the adjusting bolt (14) that corresponds to the opening (16) of the housing wall (6).

4. The apparatus according to claim 3, **characterized in that** the adjusting direction (J) extends in a vertical direction and **in that** the adjustable spacing (a₁, a₂, a₃) is predefined by a vertical offset of the elevation flank (21, 21', 21") located in the second circumferential region (19) to the contour (20) of the adjusting bolt (14) in the first circumferential region (18), wherein in each case the elevation flank (21, 21' , 21") associated with a top opening edge (15') of the bearing means (10) is active.

5. The apparatus according to one of the claims 2 to 4, **characterized in that** the adjusting bolt (14) comprises on a front end (17) indicating elements (32, 32' , 32", 32''') for designating the different adjusting contourings (22, 22', 22", 22''') of the adjusting bolt (14).

6. The apparatus according to one of the claims 2 to 5, **characterized in that** the housing wall (6) of the transfer module (5) that extends perpendicularly to the adjusting bolt (14) has an elongated hole (23) extending in the adjusting direction (J) and/or a longitudinal groove (24) such that in cooperation with a fastening bolt (25) the transfer module (5) is fastenable to the bearing means (10) so as to be displaceable in the adjusting direction (7).

7. The apparatus according to one of the claims 2 to 6, **characterized in that** the bearing means (10) comprises a latching element (30) that acts upon the adjusting bolt (14) to generate a clamping force that is directed transversely with respect to the axis (A) of the adjusting bolt (14).

8. The apparatus according to one of the claims 2 to 7, **characterized in that** for locking the transfer module (5) in the operating position, the bearing means (10) comprises a barb-shaped latching element (38) and the transfer module (5) comprises a displacement element (33) with a tapering end (37), wherein the barb-shaped latching element (38) is held in a clamping manner on a framework part (39) of the second module (3) by engaging behind said framework part by means of the tapering displacement element (33).

9. The apparatus according to claim 2, **characterized in that** the recess (43) of the housing wall (6) of the transfer module (5) comprises a multitude of adjusting contours (46) that extend in the adjusting direction (J) such that as a result of relative displacement of the transfer module (5) to the bearing means (10) in the adjusting direction (J), the adjusting position of the transfer module (5) with respect to the second module (3) is adjustable.

10. The apparatus according to claim 9, **characterized in that** the recess (43) is formed as a fir-shaped longitudinal recess (43) and that the adjusting bolt (44) is mounted by way of its end (45) in a latching manner in the longitudinal recess (43).

11. The apparatus according to claim 10, **characterized in that** the end (45) of the adjusting bolt (44) is resiliently mounted in the axial direction (A) of the adjusting bolt (44).

12. The apparatus according to claim 11, **characterized in that** the adjusting means (14; 43, 44) are configured such that the transfer module (5) is mounted so as to be adjustable in a stepped manner in the adjusting direction (J).

13. The apparatus according to claim 12, **characterized in that** the transfer module (5) extends in a bar-shaped manner transversely with respect to the adjusting direction (J) and guide means (8) are associated with the transfer slot (7) of the transfer module (5) for guiding the notes of value when they are transferred from the first module (2) to the second module (3) or vice versa.

14. A method for adjusting an installation position of modules in a self-service device, wherein a transfer module for transferring notes of value from a first module to a second module of a self-service device or vice versa is provided, wherein by means of adjusting means (14; 43, 44) a relative spacing in adjusting direction (J) is adjusted between the transfer module (5) on the one hand and the first module (2) and/or a bearing means (10) that is connectable in a positionally fixed manner to the second module (3), on the other hand, such that the spacing (a₁, a₂, a₃) between the transfer module (5) in its installation positon and the first module (2) and/or the second module (3) is smaller than a predefined maximum spacing,
**characterized in that** the relative spacing between the transfer module (5) and the bearing means (10) is adjusted in dependence on a position of rotation of the adjusting means (14), wherein in the circumferential direction the adjusting means (14) comprises differently elevated adjusting contours (22, 22', 22", 22''') that act on the bearing means (10) in terms of a relative movement in the adjusting direction (J) to the transfer module (5), and
that the selectable spacing (a₁, a₂, a₃) of the transfer module (5) to the second module (2) in the installation position is effected by a linear relative displacement of the transfer module (5) relative to the second module (3) in adjusting direction (J), wherein the adjusting means (44) which is coupled with the second module (3) is adjusted in a stepped manner in a latching recess (43) of the transfer module (5) that extends in the adjusting direction (J).

## Revendications

1. Dispositif d'ajustement d'une position de montage de modules dans un appareil en libre service (1), qui comprend un premier module (2), un deuxième module (3) et un module de transfert (5) présentant une fente de transfert (7) pour le transfert de documents de valeurs du premier module (2) au deuxième module (3) ou vice versa, le module de transfert étant retenu par des moyens de fixation dans une position de fonctionnement, ce qui entraîne la formation d'un écart avec le deuxième module, des moyens d'ajustement (14 ; 43, 44) étant associés au module de transfert (5) de telle manière que le module de transfert (5) soit monté de manière à pouvoir se déplacer par rapport au deuxième module (3) dans une direction d'ajustement (J) s'étendant perpendiculairement à la fente de transfert (7) et s'étendant dans un plan de transfert des documents de valeur prédéfini par la fente de transfert (7), les moyens d'ajustement (14 ; 43 ; 44) étant agencés dans une zone du module de transfert (5) dans laquelle le module de transfert (5) est accouplé de manière libérable au deuxième module (3) par l'intermédiaire de moyens de support (10), **caractérisé en ce qu'**un boulon d'ajustement (14, 44) d'une part et un évidement (15, 16, 43) du module de transfert (5) et/ou du moyen de support (10) d'autre part sont prévus comme moyens d'ajustement, le boulon d'ajustement (14) et/ou l'évidement (43) présentant un contour de réglage (22, 46) tel que le module de transfert (5) peut être réglé par rapport au deuxième module (3) et/ou au premier module (2) dans la direction d'ajustement (J) en fonction de la position relative du boulon d'ajustement (14, 44) par rapport à l'évidement (15, 16, 43).

2. Dispositif selon la revendication 1, **caractérisé en ce qu'**une paroi de boîtier (6) du module de transfert (5) présente une ouverture (16) dans laquelle une extrémité (17, 45) du boulon d'ajustement (14, 44) est montée de manière à pouvoir y être emboîtée, **en ce que** le boulon d'ajustement (14) présente des contours de réglage (22, 22', 22" , 22''') répartis dans la direction périphérique et espacés d'un écart radial différent d'un axe (A) du boulon d'ajustement (14), de sorte qu'en fonction d'une position en rotation du boulon d'ajustement (14) par rapport au module de transfert (5), celui-ci peut être amené dans une position d'ajustement différente par rapport au deuxième module (3) et/ou au premier module (2).

3. Dispositif selon la revendication 2, **caractérisé en ce que** les contours de réglage (22, 22', 22", 22''') sont situés dans une deuxième partie périphérique (19) du boulon d'ajustement (14) correspondant à une ouverture (15) du moyen de support (10), les contours de réglage (22, 22', 22", 22''') étant formés par des flancs surélevés (21, 21', 21") présentant une hauteur différente par rapport aux contours (20) du boulon d'ajustement (14) dans une première partie périphérique (18) du boulon d'ajustement (14) correspondant à l'ouverture (16) de la paroi de boîtier (6).

4. Dispositif selon la revendication 3, **caractérisé en ce que** la direction d'ajustement (J) s'étend dans une direction verticale et **en ce que** l'écart (a₁, a₂, a₃) réglable est prédéfini par un décalage en hauteur du flanc surélevé (21, 21', 21'') situé dans la deuxième zone périphérique (19) par rapport au contour (20) du boulon d'ajustement (14) dans la première zone périphérique (18), le flanc surélevé (21, 21', 21'') associé au bord d'ouverture supérieur (15') du moyen de support (10) étant actif dans chaque cas.

5. Dispositif selon l'une quelconque des revendications 2 à 4, **caractérisé en ce que** le boulon d'ajustement (14) présente sur une face frontale (17) des éléments d'affichage (32, 32' , 32" , 32''') pour l'identification des différents contours de réglage (22, 22', 22" , 22''').

6. Dispositif selon l'une quelconque des revendications 2 à 5, **caractérisé en ce que** la paroi de boîtier (6) du module de transfert (5), qui s'étend perpendiculairement au boulon d'ajustement (14), comprend un trou oblong (23) et/ou une rainure longitudinale (24) s'étendant dans la direction d'ajustement (J), de sorte qu'en coopération avec un boulon de fixation (25), le module de transfert (5) peut être fixé de manière à pouvoir être déplacé par rapport au moyen de support (10) dans la direction d'ajustement (7).

7. Dispositif selon l'une quelconque des revendications 2 à 6, **caractérisé en ce que** le moyen de support (10) comprend un élément d'encliquetage (30) qui agit sur le boulon d'ajustement (14) et qui sert à produire une force de serrage orientée transversalement à l'axe (A) du boulon d'ajustement (14).

8. Dispositif selon l'une quelconque des revendications 2 à 7, **caractérisé en ce que** pour bloquer le module de transfert (5) dans la position de fonctionnement, le moyen de support (10) comprend un élément d'encliquetage (38) en forme d'ardillon et le module de transfert (5) comprend un élément coulissant (33) présentant une extrémité (37) s'amincissant, l'élément d'encliquetage (38) en forme d'ardillon étant retenu par serrage, au moyen de l'élément coulissant (33) s'étendant en s'amincissant, sur une partie de châssis (39) du deuxième module (3), en venant se bloquer à l'arrière de celle-ci.

9. Dispositif selon la revendication 2, **caractérisé en ce que** l'évidement (43) de la paroi de boîtier (6) du module de transfert (5) comprend une pluralité de contours de réglage (46) s'étendant dans la direction d'ajustement (J), de sorte qu'un déplacement relatif du module de transfert (5) par rapport au moyen de support (10) dans la direction d'ajustement (J) permet de régler la position d'ajustement du module de transfert (5) par rapport au deuxième module (3).

10. Dispositif selon la revendication 9, **caractérisé en ce que** l'évidement (43) est réalisé sous la forme d'un évidement longitudinal (43) en forme de sapin et **en ce que** le boulon d'ajustement (44) est monté de manière à ce que son extrémité (45) s'encliquète dans l'évidement longitudinal (43).

11. Dispositif selon la revendication 10, **caractérisé en ce que** l'extrémité (45) du boulon d'ajustement (44) est montée de manière élastique dans la direction axiale (A) de celui-ci.

12. Dispositif selon la revendication 11, **caractérisé en ce que** les moyens d'ajustement (14 ; 43, 44) sont conçus de telle sorte que le module de transfert (5) est monté de manière à pouvoir se déplacer graduellement dans la direction d'ajustement (J).

13. Dispositif selon la revendication 12, **caractérisé en ce que** le module de transfert (5) s'étend en forme de barre transversalement à la direction d'ajustement (J) et **en ce que** des moyens de guidage (8), servant à guider les documents de valeur lors du transfert du premier module (2) au deuxième module (3) ou vice versa, sont associés à la fente de transfert (7) du module de transfert (5).

14. Procédé d'ajustement d'une position de montage de modules dans un appareil en libre service, un module de transfert (5) servant à transférer les documents de valeur d'un premier module à un deuxième module d'un appareil en libre-service ou vice versa étant prévu, des moyens d'ajustement (14 ; 43, 44) permettant de régler un écart relatif dans une direction d'ajustement (J) entre le module de transfert (5) d'une part et le premier module (2) et/ou un moyen de support (10), pouvant être relié de manière stable au deuxième module (3), d'autre part, de telle sorte que l'écart (a₁, a₂, a₃) entre le module de transfert (5) dans sa position de montage et le premier module (2) et/ou le deuxième module (3) est inférieur à un écart maximal prédéfini,
**caractérisé en ce que** l'écart relatif entre le module de transfert (5) et le moyen de support (10) est réglé en fonction d'une position en rotation du moyen d'ajustement (14), le moyen d'ajustement (14) présentant dans la direction périphérique des contours de réglage (22, 22', 22", 22''') plus ou moins surélevés, qui agissent sur le moyen de support (10) aux fins d'un déplacement relatif dans la direction d'ajustement (J) par rapport au module de transfert (5), et
**en ce que** l'écart (a₁, a₂, a₃) pouvant être sélectionné entre le module de transfert (5) et le deuxième module (2) dans la position de montage est réalisé avec succès par un déplacement relatif linéaire du module de transfert (5) par rapport au deuxième module (3) dans la direction d'ajustement (J), le moyen d'ajustement (44) accouplé au deuxième module (3) étant déplacé graduellement dans un évidement d'encliquetage (43) du module de transfert (5) s'étendant dans la direction d'ajustement (J).
